# EUROPÄISCHE PATENTANMELDUNG

(11) **EP 1 693 250 A2**
(43) Veröffentlichungstag der Anmeldung: **23.08.2006**
(21) Anmeldenummer: 06003006.1
(22) Anmeldetag: 15.02.2006
(51) Int. Cl.: B60Q 1/04

(54) **Leuchtenanordnung**

(30) Priorität: 21.02.2005 DE 102005007862
(71) Anmelder: GM Global Technology Operations, Inc., Detroit, MI 48265-3000 (US)
(72) Erfinder: Eckert, Heiko, 55411 Bingen-Büdesheim (DE); Feid, Thomas, 68239 Mannheim (DE); Gottwald, Wolfgang, 23600 Morlos Jaen (ES); Kathmann, Jörg, 33154 Salzkotten (DE); Kistinger, Thomas, 64347 Griesheim (DE); Krieg, Gregor, 63450 Hanau (DE); Reichmann, Karl-Heinz, 64589 Stockstadt (DE); Schneider, Ingolf, 65428 Rüsselsheim (DE)
(74) Vertreter: Daniel, Ulrich W.P.

(57) **Zusammenfassung**

Die vorliegende Erfindung betrifft eine Leuchtenanordnung (2), insbesondere im Kraftfahrzeugbereich, mit einem Gehäuse (3) zur Aufnahme einer Lichtquelle (4); und mit einer lichtdurchlässigen Abdeckscheibe (5) zum Schutze der Lichtquelle (4), wobei die Abdeckscheibe (5) und das Gehäuse (3) mit ihren jeweiligen Randabschnitten miteinander verbindbar sind; wobei der Randabschnitt des Gehäuses (3) einen derart geformten und sich derart in die Lücke (6) zwischen der Abdeckscheibe (5) und einem angrenzenden Anbauteil (1) erstreckenden Verlängerungsabschnitt (8) aufweist, dass die Lücke (6) aus Sicht von außerhalb der Abdeckscheibe nicht einsehbar ist.

## Beschreibung

Die vorliegende Erfindung betrifft eine Leuchtenanordnung, insbesondere im Kraftfahrzeugbereich.

Obwohl auf beliebige Leuchtenanordnungen anwendbar, werden die vorliegende Erfindung sowie die ihr zugrunde liegende Problematik in Bezug auf eine Leuchtenanordnung im Kraftfahrzeugbereich erläutert.

Leuchtenanordnungen im Kraftfahrzeugbereich dienen beispielsweise der Verkehrssicherheit. Mit ihrer Hilfe wird bei Dunkelheit oder schlechter Sicht die Fahrbahn vor dem Kraftfahrzeug ausgeleuchtet. Ferner dienen die Leuchtenanordnungen der Sichtbarmachung des Kraftfahrzeuges für nachfolgende Fahrzeuge durch entweder Aussenden von Licht oder durch Reflektieren des von dem nachfolgenden Fahrzeug auftreffenden Lichts.

Auf Grund eines starken Einflusses des Fahrzeugdesigns auf das Image eines Kraftfahrzeuges unterliegen Leuchtenanordnungen im Kraftfahrzeugbereich heute stärker als bisher Einflüssen des Fahrzeugdesigns. Daher sind mittlerweile bei der Konstruktion und Ausgestaltung von Scheinwerfern für Fahrzeuge Randbedingungen zu berücksichtigen, die vor wenigen Jahren bei der Entwicklung und Konstruktion von Leuchtenanordnungen bzw. Scheinwerfern keine oder nur eine untergeordnete Rolle gespielt haben. So wird beispielsweise mittlerweile bei Fahrzeugleuchten bzw. Fahrzeugscheinwerfern eine transparente Erscheinung der Leuchte angestrebt. Hierzu finden transparente Abdeckscheiben Verwendung, die einen Aufnahmebereich des Gehäuses abdecken. Auf Grund dieser transparenten Abdeckscheiben ist ein sehr guter Einblick in die Scheinwerfer bzw. Leuchtenanordnungen von außen möglich. Dabei ist es aus optischen Überlegungen wünschenswert, ein modernes Design, wie beispielsweise ein Tube-Design zu verwirklichen.

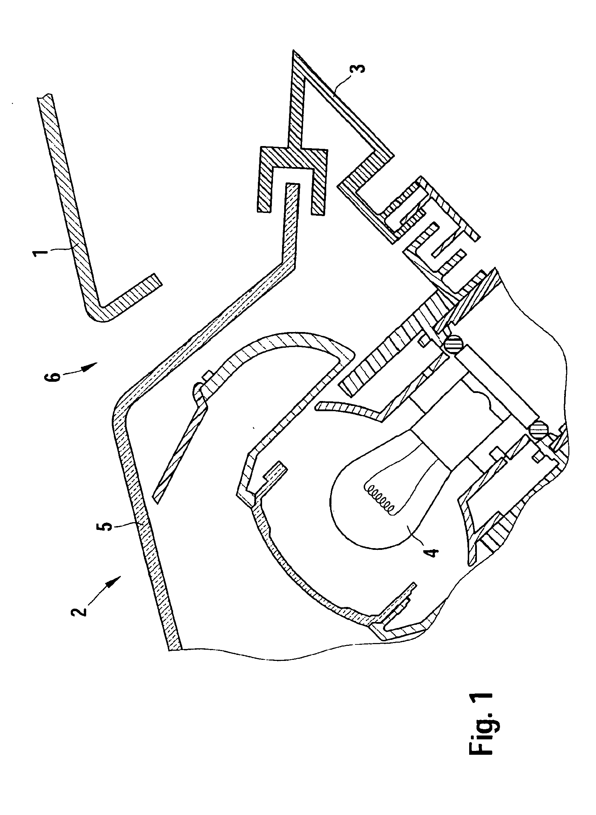

Figur 1 illustriert eine schematische Querschnittsansicht einer in eine Kraftfahrzeugkarosserie 1 integrierte Leuchtenanordnung 2 nach einem Ansatz gemäß dem Stand der Technik. Wie in Figur 1 ersichtlich ist, besteht die Leuchtenanordnung 2 aus einem Gehäuse 3, in welchem eine Lichtquelle 4, beispielsweise in Form einer Glühlampe oder dergleichen, aufgenommen ist. Das Gehäuse 3 ist ferner mit einer lichtdurchlässigen Abdeckscheibe 5 verbunden, wobei die Abdeckscheibe vorzugsweise einem Schutz der Lichtquelle 4, etwaigen Blendeneinrichtungen oder anderen Bauteilen der Leuchtenanordnung 2 dient.

Wie in Figur 1 zudem dargestellt ist, ist die Leuchtenanordnung 2 in der Kraftfahrzeugkarosserie 1 derart zwischen angrenzenden Anbauteilen des Kraftfahrzeuges eingesetzt, dass für einen Ausgleich von Einbautoleranzen bzw. Bauteiltoleranzen im Allgemeinen eine Lücke 6 zwischen der Abdeckscheibe 5 und dem angrenzenden Anbauteil der Kraftfahrzeugkarosserie 1 vorhanden ist.

An diesem Ansatz nach dem Stand der Technik hat sich jedoch die Tatsache als nachteilig herausgestellt, dass ein sehr guter Einblick durch die Lücke 6 hindurch auf etwaige unästhetische mechanische oder elektronische Bauteile der Leuchtanordnung von außen möglich ist. Wie oben bereits erläutert, ist es allerdings aus designtechnischen Gründen wünschenswert, einen Einblick auf die eher unästhetischen Bauteile oder dergleichen von Außen zu verhindern, um einen ästhetischen Gesamteindruck zu schaffen.

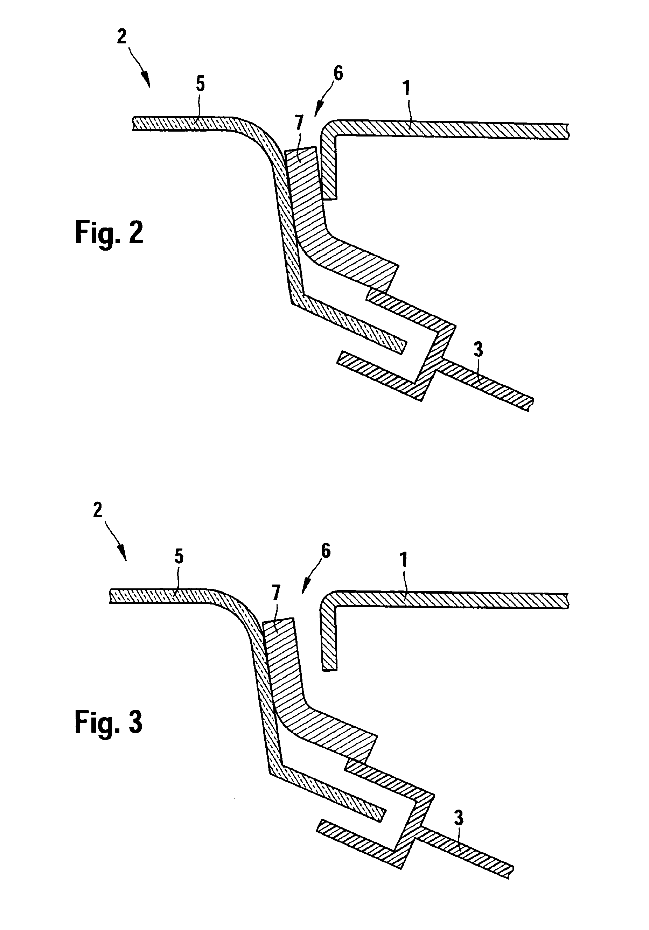

Im Stand der Technik findet sich zur Lösung des Problems der Vorschlag, einen Dichtgummi 7 - siehe Fig. 2 - in die Lücke 6 zwischen der Abdeckscheibe 5 und dem angrenzenden Anbauteil 1 einzusetzen, um den Einblick von Außen auf unästhetische Bauteile der Leuchtenanordnung 2 zu verhindern, wie in Figur 2 schematisch in einer Querschnittsansicht dargestellt ist.

Wie in Figur 2 zudem ersichtlich ist, ist der Dichtgummi 7 derart zwischen die Abdeckscheibe 5 und das angrenzende Anbauteil der Kraftfahrzeugkarosserie 1 in die Lücke 6 eingesetzt, dass ein Einblick von Außen durch die Lücke 6 hindurch auf etwaige unästhetische Bauteile der Leuchtenanordnung 2 verhindert wird. Zudem soll der Einblick auch auf andere durch die Lücke sichtbare Bauteile, z.B. neben der Leuchte angeordnete Bauteile, verhindert werden.

An diesem Ansatz gemäß dem Stand der Technik hat sich jedoch die Tatsache als nachteilig herausgestellt, dass aufgrund von Einbautoleranzen bzw. eines Spiels zwischen benachbarten Bauteilen die Breite der Lücke 6 keinen konstanten Wert annimmt, sondern je nach Einbau und verwendeter Bauteile in ihrer Breite variiert. Figur 3 illustriert eine schematische Querschnittsansicht der Leuchtenanordnung 2 aus Figur 2 gemäß dem Stand der Technik, wobei jedoch die Breite der Lücke 6 aufgrund von Einbautoleranzen bzw. aufgrund eines größeren Spiels breiter ausgebildet ist.

Wie in Figur 3 ersichtlich ist, ist bei einem Auftreten eines größeren Spiels trotz des Einsetzens des Dichtgummis 7 ein Einblick von Außen durch die Lücke 6 auf etwaige innere Strukturen der Leuchtenanordnung 2 bzw. des Kraftfahrzeuges möglich. Somit stellt der Dichtgummi 7 lediglich einen begrenzten Einblickschutz dar, der bei größeren Breiten der Lücke 6 zu einem unerwünschten Offenlegen von inneren Strukturen führt.

Zudem werden im Allgemeinen gegenwärtig kostenintensive Zwei-Komponenten-Dichtungen als Dichtgummi 7 verwendet, welche aus ökonomischen Gründen nachteilig sind.

Der vorliegenden Erfindung liegt daher die Aufgabe zu Grunde, eine Leuchtenanordnung bereitzustellen, welche auf kostengünstigere Weise einen Einblick von Außen durch die Lücke zwischen der Abdeckscheibe der Leuchtenanordnung und den angrenzenden Bauteilen der Fahrzeugkarosserie auch unter Berücksichtung von Einbautoleranzen jederzeit verhindert.

Erfindungsgemäß wird diese Aufgabe durch eine Leuchtenanordnung mit den Merkmalen des Patentanspruchs 1 gelöst.

Die der vorliegenden Erfindung zugrunde liegende Idee besteht darin, dass die Leuchtenanordnung ein Gehäuse zur Aufnahme einer Lichtquelle und eine lichtdurchlässige Abdeckscheibe für einen Schutz der Lichtquelle aufweist, wobei die Abdeckscheibe und das Gehäuse mit ihren jeweiligen Randabschnitten miteinander verbindbar sind; wobei der Randabschnitt des Gehäuses einen derart geformten und sich derart in die Lücke zwischen der Abdeckscheibe und einem angrenzenden Anbauteil erstreckenden Verlängerungsabschnitt aufweist, dass die Lücke aus Sicht von außerhalb der Abdeckscheibe geschlossen ist bzw. innere Strukturen der Leuchtenanordnung verdeckt sind.

Die vorliegende Erfindung weist gegenüber dem Stand der Technik den Vorteil auf, dass der Verlängerungsabschnitt des Gehäuses die Sicht von Außen auf unästhetische Bauteile der Leuchtenanordnung auf einfache und kostengünstige Weise verhindert und diese abdeckt. Es kann auf den kostenintensiven Dichtgummi verzichtet werden, so dass die Nachteile bei einem falschen Einbau, einem Verrutschen oder einem Verlorengehen des Dichtgummis beseitigt werden. Zudem kann der Verlängerungsabschnitt des Gehäuses derart geformt ausgebildet werden, dass die Lücke zwischen der Abdeckscheibe und dem angrenzenden Anbauteil auch bei verschiedenen Breiten und somit auch bei der größtmöglich auftretenden Breite der Lücke verdeckt ist und ein Einblick auf innere Strukturen der Leuchtenanordnung verhindert wird.

Vorteilhafte Ausgestaltungen und Weiterbildungen der vorliegenden Erfindung ergeben sich aus den Unteransprüchen sowie der Beschreibung unter Bezugnahme auf die Figuren der Zeichnung.

Gemäß einer bevorzugten Weiterbildung ist der Randabschnitt des Gehäuses als umlaufendes Aufnahmebett ausgebildet und nimmt den zugeordneten Randabschnitt der Abdeckscheibe für eine Befestigung derselben auf. Somit dient das Aufnahmebett des Gehäuses sowohl einer Befestigung des Verlängerungsabschnittes an demselben als auch einer Befestigung der Abdeckscheibe an dem Gehäuse der Leuchtenanordnung.

Gemäß einer weiteren bevorzugten Weiterbildung ist der Verlängerungsabschnitt in die Lücke zwischen der Abdeckscheibe und dem angrenzenden Anbauteil in Richtung der Außenseite der Abdeckscheibe verlängert. Vorzugsweise erstreckt sich der Verlängerungsabschnitt von dem Randabschnitt des Gehäuses geradlinig in Richtung der Außenumrandung der Abdeckscheibe. Vorzugsweise gelangt der Verlängerungsabschnitt derart in Anlage mit der Außenumrandung der Abdeckscheibe, dass der Verlängerungsabschnitt eine Sichtbarriere bezüglich eines Einblicks von Außen in die Lücke darstellt. Durch die Anlage des Verlängerungsabschnitts mit der Außenumrandung der Abdeckscheibe wird gewährleistet, dass die Lücke vollständig verdeckt ist.

Gemäß einem weiteren bevorzugten Ausführungsbeispiel weist der Verlängerungsabschnitt eine abgewinkelte Anformung an seinem freien Ende auf. Die abgewinkelte Anformung erstreckt sich vorzugsweise unter einem vorbestimmten Winkel von dem sich in Anlage mit der Abdeckscheibe befindlichen Abschnitt des Verlängerungsabschnitts bis unterhalb des angrenzenden Anbauteils. Vorzugsweise weist die abgewinkelte Anformung eine derartige Länge auf, dass die Lücke zwischen der Abdeckscheibe und dem angrenzenden Anbauteil auch dann vollständig verdeckt ist, wenn die Lücke aufgrund größerer Toleranzen ihre größtmögliche Breite einnimmt. Somit wird auch beim Auftreten von größtmöglichen Toleranzen und einem größtmöglichen Spiel jederzeit der Einblick von Außen verhindert.

Die vorliegende Erfindung wird nachfolgend anhand der in den schematischen Figuren der Zeichnung angegebenen Ausführungsbeispiele näher erläutert. Von den Figuren zeigen:
- Fig. 1: eine schematische Querschnittsansicht einer Leuchtenanordnung gemäß dem Stand der Technik;
- Fig. 2: eine schematische Querschnittsansicht einer Leuchtenanordnung mit eingesetzten Dichtgummi gemäß dem Stand der Technik bei kleinerem Spiel;
- Fig. 3: eine schematische Querschnittsansicht einer Leuchtenanordnung mit einem eingesetzten Dichtgummi gemäß dem Stand der Technik bei größerem Spiel;
- Fig. 4: eine schematische Querschnittsansicht einer Leuchtenanordnung gemäß einem bevorzugten Ausführungsbeispiel der vorliegenden Erfindung bei kleinerem Spiel; und
- Fig. 5: eine schematische Querschnittsansicht einer Leuchtenanordnung gemäß einem bevorzugten Ausführungsbeispiel der vorliegenden Erfindung bei größerem Spiel.

In den Figuren bezeichnen gleiche Bezugszeichen gleiche bzw. funktionsgleiche Komponenten, soweit nichts Gegenteiliges angegeben ist.

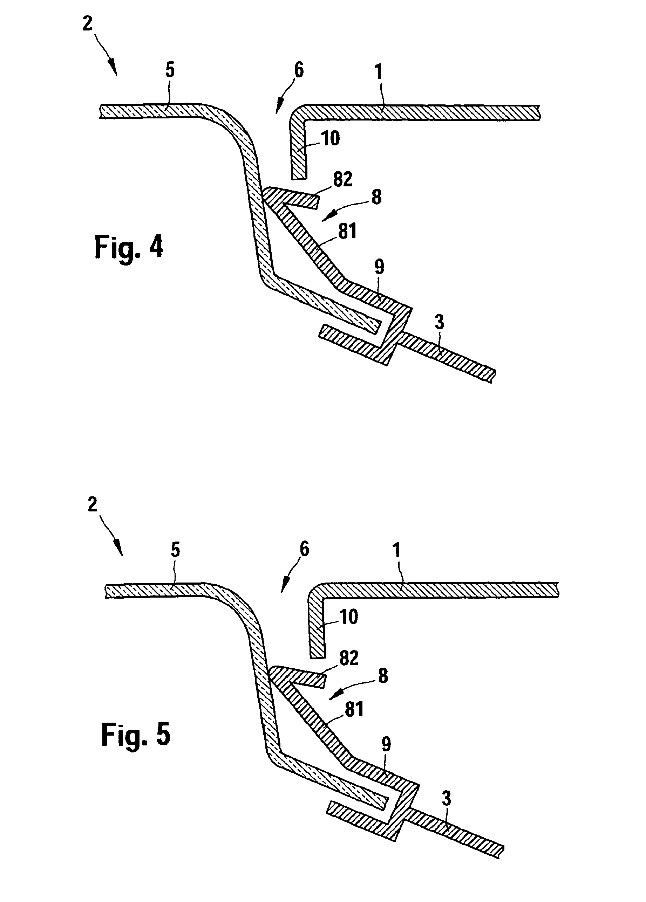

Die Figuren 4 und 5 illustrieren schematische Querschnittsansichten einer Leuchtenanordnung 2 gemäß einem bevorzugten Ausführungsbeispiel der vorliegenden Erfindung, welche in einer Fahrzeugkarosserie beispielsweise benachbart zu einem Kotflügelabschnitt 1 eines Kraftfahrzeuges in dem Kraftfahrzeug eingebaut ist.

Wie in den Figuren 4 und 5 ersichtlich ist, weist die exemplarische Leuchtenanordnung 2 eine lichtdurchlässige Abdeckscheibe 5 auf, welche vorzugsweise einem Schutz von etwaigen Lichtquellen, Blenden, Reflektoren der Leuchtenanordnung 2 oder dergleichen dient. Die Abdeckscheibe 5 ist mit seinem umlaufenden Randabschnitt mit einem zugeordneten Randabschnitt des Gehäuses 3 vorteilhaft verbunden. Beispielsweise kann der umlaufende Randabschnitt der Abdeckscheibe 5 in ein Aufnahmebett 9 des Gehäuses 3 eingeklipst bzw. eingesetzt werden. Es ist für einen Fachmann offensichtlich, dass auch andere Befestigungsmittel für eine Befestigung der Abdeckscheibe 5 an dem Gehäuse 3 vorstellbar sind, beispielsweise eine Klebeverbindung.

Figur 4 stellt eine Lücke 6 zwischen der Abdeckscheibe 5 und dem angrenzenden Kotflügelabschnitt 1 bei einem kleineren auftretenden Spiel zwischen den angrenzenden Bauteilen dar. Im Unterschied dazu zeigt Figur 5 eine Lücke 6 mit einer größeren Breite in Folge eines größeren auftretenden Spiels zwischen der Abdeckscheibe 5 und dem angrenzenden Karosserieabschnitt 1 im Vergleich zu Figur 4.

Um die Lücke 6 zwischen der Abdeckscheibe 5 und dem angrenzenden Kotflügelabschnitt 1 bei jeglichem auftretenden Spiel zwischen diesen Bauteilen von Außen nicht einsehbar und somit verdeckt auszugestalten, wird das Gehäuse 3 vorzugsweise in die Lücke 6 hinein verlängert ausgebildet.

Beispielsweise weist der äußere Randabschnitt des Aufnahmebetts 9 einen Verlängerungsabschnitt 8 auf, der sich vorteilhaft aus einem geradlinigen Abschnitt 81 und einem daran angeformten und abgewinkelten Abschnitt 82 zusammensetzt, wie in den Figuren 4 und 5 ersichtlich ist. Dabei verläuft der geradlinige Abschnitt 81 des Verlängerungsabschnitts 8 vorzugsweise geradlinig direkt von dem zugeordneten Abschnitt des Aufnahmebetts 9 in Richtung des Umfangsrandes der Abdeckscheibe 5 bis zu einer Anlage mit demselben. Von diesem Anlagepunkt ausgehend verläuft der abgewinkelte Abschnitt 82 vorteilhaft in Richtung des angrenzenden Karosserieteils 1 derart, dass er sich zumindest vollständig bis unter den abgewinkelten Abschlussabschnitt des angrenzenden Anbauteils erstreckt, wie in den Figuren 4 und 5 illustriert ist.

Die Neigung und die Länge des geradlinigen Abschnitts 81, der selbstverständlich auch gekrümmt ausgebildet sein kann, sowie der Winkel, mit welchem der angeformte Abschnitt 82 von dem geradlinigen Abschnitt 81 abgewinkelt ist, und die Länge des angeformten Abschnitts 82 sind entsprechend der verwendeten Abdeckscheibe 5 sowie den zugeordneten Einbauteilen geeignet auszubilden. Entscheidend ist lediglich, dass das Gehäuse 3 der Leuchtenanordnung 2 derart in die Lücke 6 zwischen der Abdeckscheibe 5 und dem angrenzenden Anbauteil 1 mit einer vorbestimmten Form hinein verlängert wird, dass die Lücke 6 aus Sicht von Außen nicht einsehbar ist, auch unter Annahme eines größtmöglichen Spiels zwischen der Abdeckscheibe 5 und dem angrenzenden Anbauteil 1.

Es ist für einen Fachmann offensichtlich, dass der Verlängerungsabschnitt 8 des Gehäuses 3 beliebige Formen, Abwinklungsabschnitte, Krümmungen, Neigungen oder dergleichen aufweisen kann, solange für eine vollständige Abdeckung der Lücke 6 für einen optimalen ästhetischen Gesamteindruck gesorgt ist.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

### Bezugszeichenliste

- 1: Kraftfahrzeugkarosserie
- 10: Anschlussabschnitt
- 2: Leuchtenanordnung
- 3: Gehäuse
- 4: Lichtquelle
- 5: Abdeckscheibe
- 6: Lücke
- 7: Dichtgummi
- 8: Verlängerungsabschnitt
- 81: geradliniger Abschnitt
- 82: abgewinkelter Abschnitt
- 9: Aufnahmebett

## Patentansprüche

1. Leuchtenanordnung (2), insbesondere im Kraftfahrzeugbereich, mit:
einem Gehäuse (3) zur Aufnahme einer Lichtquelle (4); und mit
einer lichtdurchlässigen Abdeckscheibe (5) für einen Schutz der Lichtquelle (4), wobei die Abdeckscheibe (5) und das Gehäuse (3) mit ihren jeweiligen Randabschnitten miteinander verbindbar sind;
wobei der Randabschnitt des Gehäuses (3) einen derart geformten und sich derart in die Lücke (6) zwischen der Abdeckscheibe (5) und einem angrenzenden Anbauteil (1) erstreckenden Verlängerungsabschnitt (8) aufweist, dass die Lücke (6) aus Sicht von außerhalb der Abdeckscheibe nicht einsehbar ist.

2. Leuchtenanordnung (2) nach Anspruch 1, **dadurch gekennzeichnet, dass** der Randabschnitt des Gehäuses (3) als umlaufendes Aufnahmebett (9) ausgebildet ist und den zugeordneten Randabschnitt der Abdeckscheibe (5) für eine Befestigung derselben aufnimmt.

3. Leuchtenanordnung (2) nach Anspruch 1 oder 2, **dadurch gekennzeichnet, dass** der Verlängerungsabschnitt (8) in die Lücke (6) zwischen der Abdeckscheibe (5) und dem angrenzenden Anbauteil (1) in Richtung der Außenseite der Abdeckscheibe (5) verlängert ist.

4. Leuchtenanordnung (2) nach wenigstens einem der vorhergehenden Ansprüche, **dadurch gekennzeichnet, dass** sich der Verlängerungsabschnitt (8) von dem Randabschnitt des Gehäuses (3) geradlinig in Richtung der Umfangsumrandung der Abdeckscheibe (5) erstreckt und mit dieser in Anlage gelangt.

5. Leuchtenanordnung (2) nach wenigstens einem der vorhergehenden Ansprüche, **dadurch gekennzeichnet, dass** der Verlängerungsabschnitt (8) einen geradlinigen Abschnitt (81) und einen an dem freien Ende davon angeformten und unter einem vorbestimmten Winkel abgewinkelten Abschnitt (82) aufweist.

6. Leuchtenanordnung (2) nach Anspruch 5, **dadurch gekennzeichnet, dass** sich der abgewinkelte Abschnitt (82) unter einem vorbestimmten Winkel von dem sich in Anlage mit der Abdeckscheibe (5) befindlichen Abschnitt (81) des Verlängerungsabschnitts (8) bis unterhalb des angrenzenden Anbauteils (1) unter der Annahme einer größtmöglichen Lücke (6) zwischen der Abdeckscheibe (5) und dem angrenzenden Anbauteil (1) aufgrund eines zu erwartenden größtmöglichen Spiels zwischen denselben erstreckt.
